# EUROPÄISCHE PATENTSCHRIFT

(11) **EP 3 130 481 B1**
(45) Veröffentlichungstag und Bekanntmachung des Hinweises auf die Patenterteilung: **14.03.2018**
(21) Anmeldenummer: 15180649.4
(22) Anmeldetag: 11.08.2015
(51) Int. Cl.: B60C 11/12, B60C 11/11

(54) **FAHRZEUGLUFTREIFEN**
PNEUMATIC TYRE FOR A VEHICLE
PNEUMATIQUE DE VEHICULE

(43) Veröffentlichungstag der Anmeldung: 15.02.2017
(73) Patentinhaber: Continental Reifen Deutschland GmbH, 30165 Hannover (DE)
(72) Erfinder: Brockmann, Jürgen, 30171 Hannover (DE); Seng, Matthias, 30453 Hannover (DE); Jackstadt, Michael, 30167 Hannover (DE)
(74) Vertreter: Finger, Karsten

(56) Entgegenhaltungen:
- EP-A1- 0 774 307
- EP-B1- 2 517 867
- US-A1- 2008 251 175

## Beschreibung

Die Erfindung betrifft einen Fahrzeugluftreifen, insbesondere für den Einsatz unter winterlichen Fahrbedingungen, mit einem Laufstreifen mit durch Rillen voneinander getrennten Profilpositiven, beispielsweise Profilblöcken, in welchen im Wesentlichen in axialer Richtung verlaufende Einschnitte ausgebildet sind, welche in radialer Richtung jeweils bis in eine Tiefe von 70% bis 100% der maximalen Profiltiefe reichen, jeweils zwei zur Mittelebene des Einschnittes symmetrisch verlaufende Einschnittwände aufweisen und sich in radialer Richtung aus drei aneinander anschließenden Abschnitten zusammensetzen mit einem radial äußeren Abschnitt, welcher im Wesentlichen von in radialer Richtung verlaufenden Wandabschnitten begrenzt ist und sich bis in eine Tiefe von 70% bis 90% der Tiefe des Einschnittes erstreckt, einem zwischen dem radial äußere Abschnitt und dem radial inneren Abschnitt verlaufenden mittleren Abschnitt und mit einem radial inneren Abschnitt, welcher im Querschnitt von der Mittelebene nach außen gerundet verlaufende Wandabschnitte aufweist.

Ein Reifen der eingangs ist beispielsweise aus der EP 2 072 286 B1 bekannt. Der Laufstreifen des Reifens weist mit Einschnitten versehene Profilblöcke auf. Die Einschnitte weisen einen über den Großteil ihrer radialen Erstreckung verlaufenden äußeren Abschnitt konstanter Breite auf, der radial innerste verbreiterte Abschnitt verläuft kreisbogenförmig mit einem Innenradius, welcher 0,5 mm bis 5,0 mm beträgt. Ein Übergangsabschnitt zwischen diesen Abschnitten weist Einschnittwände auf, die im Querschnitt entlang eines Außenradius, welcher 0,5 mm bis 8,0 mm beträgt, gekrümmt sind. Ferner stehen der Außen- und der Innenradius in einem speziellen Verhältnis zueinander. Ein zur Einformung derartiger Einschnitte geeignetes Formsegment mit einer Lamelle ist aus der EP 2 517 867 B1 bekannt.

Der aus der EP1 920 951 B1 bekannte Fahrzeugluftreifen weist einen Laufstreifen mit Profilblöcken mit einem inneren und einem äußeren Einschnittpaar auf. Das innere Einschnittpaar ist im mittleren Bereich des Profilblocks angeordnet. Vom äußeren Einschnittpaar befindet sich je ein Einschnitt außerhalb des inneren Einschnittpaares. Jeder Einschnitt weist beim Einschnittgrund einen erweiterten Abschnitt auf, wobei die erweiterten Abschnitte der beiden Einschnittpaare unterschiedliche Krümmungen besitzen.

Beim Einsatz von Reifen unter winterlichen Fahrbedingungen, beispielsweise auf mit Eis bedeckten Fahrbahnen, wird durch die Reibenergie zwischen dem Laufstreifen des Reifens und dem Eis ein Schmelzwasserfilm, ein "Liquid Layer", erzeugt, der durch Profilpositivkanten, insbesondere durch die Blockkanten bei Querrillen oder Einschnitten, zum Großteil weggewischt wird, sodass auch ein Großteil der Oberfläche der Profilpositive, beispielsweise der Profilblöcke, in direkten Reibkontakt mit dem Untergrund kommt. Das Volumen des wegzuwischenden "Liquid Layers" ist von diversen Faktoren, insbesondere den Umgebungstemperaturen, wie Eistemperatur, Reifentemperatur und Lufttemperatur, sowie von der eingebrachten Reibenergie abhängig und ist daher bei Temperaturen um den Gefrierpunkt am größten. Zur Sicherstellung eines optimalen Reibkontaktes zwischen dem Laufstreifen und dem Untergrund sollte möglichst viel Schmelzwasser von den Einschnitten aufgenommen bzw. abgeleitet werden, wobei jedoch die Größe der Kontaktfläche der Profilpositive bzw. Profilblöcke zum Untergrund möglichst groß bleiben soll.

Die bisher bekannten in Profilblöcken vorgesehenen Einschnitte mit verbreiterten Abschnitten beim Einschnittgrund verursachen einen Spannungsverlauf im Profilblock, der sich als nachteilig für den Rollwiderstand und den Nassgriff herausgestellt hat. Insbesondere ergeben sich ein ungleichmäßiges Biegeverhalten der Blockelemente zwischen den Einschnitten und eine nachteilige zu starke Kompression der Blockelemente bei Druckbelastungen.

Der Erfindung liegt daher die Aufgabe zugrunde, einen Reifen der eingangs genannten derart zu gestalten dass der Rollwiderstand reduziert und die Nassgriffperformance verbessert ist.

Die gestellte Aufgabe wird erfindungsgemäß dadurch gelöst, dass sich der zwischen dem radial äußeren Abschnitt und dem radial inneren Abschnitt verlaufende mittlere Abschnitt bis in eine Tiefe von 80 % bis 95 % der Tiefe der des Einschnittes erstreckt und von Wandabschnitten begrenzt ist, die unter Verbreiterung des mittleren Abschnittes Richtung Einschnittgrund jeweils unter einem Winkel von 5° bis 60° zur radialen Richtung verlaufen, wobei dem gekrümmten Verlauf der Wandabschnitte im radial inneren Abschnitt Radien zugrunde liegen, deren zugehörige Kreismittelpunkte entlang einer senkrecht auf die Mittelebene des Einschnittes verlaufenden Linie liegen, wobei der Mittelpunkt des zum kleinsten Radius gehörenden Kreises auf der Mittelebene liegt und dieser Radius zum tiefsten Punkt des Einschnittes verläuft, wobei der größte Radius jeweils zum radial äußeren Endpunkt jedes Wandabschnittes verläuft und der Mittelpunkt seines Kreises der am weitesten von der Mittelebene entfernt liegende Mittelpunkt ist und wobei zwischen den Punkten die Radien stetig zunehmen und der Abstand der Mittelpunkte der zugehörigen Kreise zur Mittelebene größer wird.

Erfindungsgemäß gestaltete Einschnitte bewirken eine deutliche Verringerung der Gummikompression bei Druckbelastung und ermöglichen ein gleichmäßiges Biege- und Verformungsverhalten der Blockelemente der Profilblöcke. Dadurch werden der Rollwiderstand reduziert und die Nassgriffperformance deutlich verbessert. Durch die spezielle Ausgestaltung des radial inneren Abschnittes, der Einschnittform beim Einschnittgrund, lässt sich eine deutliche Verbesserung des Biegeverhaltens der einzelnen Blockelemente erzielen, ohne die Einschnitte im Bereich des Einschnittgrundes zu stark zu verbreitern.

Bei einer bevorzugten Ausführungsform beträgt der Abstand des Mittelpunktes des Kreises mit dem größten Radius von der Mittelebene 10% bis 50% der größten Breite des radial inneren Abschnittes. Bei einer weiteren bevorzugten Ausführungsform beträgt der kleinste Radius 40% bis 60% der größten Breite des radial inneren Abschnittes und der größte Radius bis zum Zweifachen des kleinsten Radius, insbesondere bis zum 1,5-Fachen, besonders bevorzugt bis zum 1,3-Fachen. Durch diese Maßnahmen ist eine relativ große Gestaltungsfreiheit bezüglich der Ausführung des radial inneren Abschnittes gegeben, wobei der Effekt einer deutlichen Verringerung der Gummikompression bei Druckbelastung voll erhalten bleibt.

Weitere besondere Ausgestaltungen der Einschnitte tragen zu einem gleichmäßigen Biege- und Verformungsverhalten der Blockelemente der Profilblöcke bei. Zu diesen Ausgestaltungen gehört, dass der radial innere Abschnitt auf seiner breitesten Stelle eine Breite von 150% bis 400% der Breite des radial äußeren Abschnittes aufweist und dass die breiteste Stelle des radial inneren Abschnittes in radialer Richtung in einer Tiefe liegt, welche 85% bis 97% der Tiefe des Einschnittes beträgt.

Der radial äußere Abschnitt, welcher die größte radiale Erstreckung von allen Abschnitten aufweist, besitzt vorzugsweise eine Breite von 0,30 mm bis 0,80 mm, insbesondere von 0,40 mm bis 0,60 mm.

Weitere Merkmale, Vorteile und Einzelheiten der Erfindung werden nun anhand der Zeichnung, die schematisch ein Ausführungsbeispiel der Erfindung darstellt, näher beschrieben. Dabei zeigen
Fig. 1 eine Ansicht eines Ausschnittes eines Laufstreifens eines Fahrzeugluftreifens mit einer Ausführungsvariante gemäß der Erfindung und
Fig. 2 einen Querschnitt eines Einschnittes entlang der Linie II - II der Fig1.

In der nachfolgenden Beschreibung wird unter der Krümmung der Kehrwert des Radius jenes Kreises verstanden, welcher an jeder gekrümmten Stelle dem Krümmungsverlauf am besten angenähert ist.

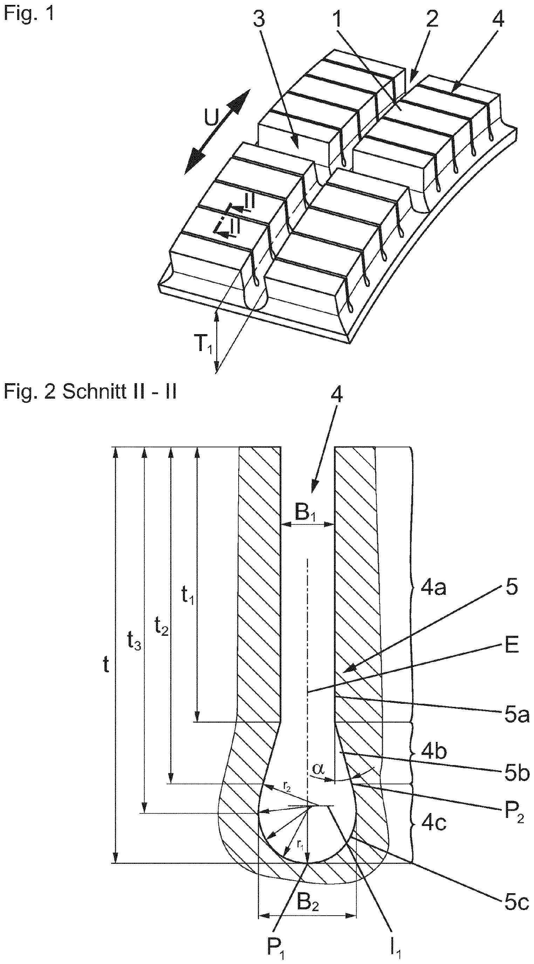

In Fig. 1 sind von einem Laufstreifen eines Fahrzeugluftreifens in Radialbauart, insbesondere eines für den Einsatz unter winterlichen Fahrbedingungen geeigneten Reifens für Personenkraftwagen, Vans oder Light-Trucks, vier Profilblöcke 1 dargestellt, wobei die Umfangsrichtung des Reifens durch den Doppelpfeil U gekennzeichnet ist.

Die Profilblöcke 1 gehören zu zwei jeweils in Umfangsrichtung U verlaufenden Profilblockreihen, welche durch eine im gezeigten Ausführungsbeispiel gerade verlaufende Umfangsrille 2 voneinander getrennt sind, wobei die Profilblockreihen vorzugsweise von weiteren, nicht bezeichneten Umfangsrillen begrenzt sind. Die Umfangsrille 2 weist in radialer Richtung ein Tiefe T von 7,0 mm bis 10,0 mm, insbesondere von bis zu 9,0 mm auf, wobei die Tiefe T der für den jeweiligen Fahrzeugluftreifen vorgesehenen maximalen Profiltiefe entspricht. Innerhalb der Profilblockreihen sind in Umfangsrichtung U benachbarte Profilblöcke 1 jeweils durch eine Querrille 3 voneinander getrennt, welche vorzugsweise eine mit der Umfangsrille 2 zumindest im Wesentlichen übereinstimmende Tiefe aufweist oder etwas seichter ausgeführt ist.

Jeder Profilblock 1 ist mit einer Anzahl von Einschnitten 4 versehen, wobei bei der gezeigten Ausführungsvariante vier übereinstimmend ausgeführte Einschnitte 4 pro Profilblock 1 vorgesehen sind. Die Einschnitte 4 erstrecken sich zumindest im Wesentlichen parallel zueinander sowie zumindest im Wesentlichen parallel zu den Querrillen 3 und durchqueren jeweils den Profilblock 1. Die gegenseitigen Abstände der Einschnitte 4 innerhalb eines Profilblockes 1 stimmen zumindest im Wesentlichen überein und sind vorzugsweise im Wesentlichen gleich groß zu den Abständen zwischen dem jeweils in Umfangsrichtung U am weitesten außenliegenden Einschnitt 4 und der Profilblockkante bei der jeweiligen Querrille 3.

Gemäß Fig. 2, welche einen Querschnitt eines Einschnittes 4 zeigt, reicht jeder Einschnitt 4 in radialer Richtung bis in eine Tiefe t, welche 70% bis 100%, insbesondere 80% bis 90%, der Tiefe T der Umfangsrille 2 beträgt. Jeder Einschnitt 4 ist durch zwei Einschnittwände 5 begrenzt, welche bezogen auf eine durch den Einschnitt 4 verlaufende Mittelebene E zueinander spiegelsymmetrisch gestaltet sind. Wie nachfolgend noch erläutert wird, verleihen die beiden Einschnittwände 5 dem Einschnitt 4 eine sich über seine Tiefe t speziell verändernde Breite.

Jeder Einschnitt 4 setzt sich aus einem radial äußeren Abschnitt 4a, einem mittleren Abschnitt 4b und einem radial inneren Abschnitt 4c zusammen, wobei der mittlere Abschnitt 4b und der radial innere Abschnitt 4c dem Einschnitt 4 im Querschnitt eine birnenförmige Gestalt verleihen. Die Abschnitte 4a, 4b und 4c weisen Wandabschnitte 5a, 5b, 5c auf, wobei je zwei Wandabschnitte 5a, 5b, 5c einander gegenüberliegen. Zwischen den Wandabschnitten 5a und 5b liegt jeweils ein Knick vor, die Wandabschnitte 5b und 5c schließen knickfrei aneinander an.

Der radial äußere Abschnitt 4a erstreckt sich in radialer Richtung und bis eine Tiefe t₁, welche 70% bis 90% der Tiefe t beträgt, die Wandabschnitte 5a verlaufen in radialer Richtung. Der radial äußere Abschnitt 4a weist daher eine konstante Breite B₁ auf, wobei die Breite B₁ 0,30 mm bis 0,80 mm, insbesondere 0,40 mm bis 0,60 mm, beträgt.

Der unmittelbar an den radial äußeren Abschnitt 4a anschließende mittlere Abschnitt 4b erstreckt sich bis in eine Tiefe t₂, welche 80% bis 95% der Tiefe t beträgt. Die den mittleren Abschnitt 4b begrenzenden Wandabschnitte 5b verlaufen unter einem Winkel α von 5° bis 60°, vorzugsweise höchstens 45°, zur radialen Richtung, wobei der mittlere Abschnitt 4b in Richtung Einschnittinneres kontinuierlich breiter wird.

Die Wandabschnitte 5c im radial inneren Abschnitt 4c sind speziell gekrümmt und schließen an der tiefsten Stelle des Einschnittes 4, in der Tiefe t, aneinander knickfrei (tangential) an. Die inneren Wandabschnitte 5c weisen jeweils eine von ihrem radial äußeren Ende zu ihrem radial inneren Ende kontinuierlich abnehmende Krümmung auf, sodass ihre Krümmung in der Tiefe t am kleinsten ist. Der radial innere Abschnitt 4c weist ferner in einer Tiefe t₃ seine größte Breite B₂ von 150 % bis 400 % der Breite B₁ auf, wobei die Tiefe t₃ 85% bis 97% der Tiefe t beträgt.

Wie Fig. 2 zeigt liegt dem speziellen Krümmungsverlauf der Wandabschnitte 5c eine kontinuierliche Verschiebung der zu Radien gehörenden Kreismittelpunkte zugrunde, wobei der kleinste Radius r₁ 40 % bis 60 % der größten Breite B₂ des radial inneren Abschnittes4c beträgt. Der Mittelpunkt des zu diesem Radius r₁ gehörenden Kreises liegt auf der Mittelebene E, der Radius r₁ verläuft zum tiefsten Punkt P₁ des Einschnittes 4. Der größte Radius r₂ verläuft jeweils zum radial äußeren Endpunkt P₂ jedes Wandabschnittes 5c, der Mittelpunkt seines Kreises befindet sich auf einer senkrecht auf die Mittelebene E des Einschnittes 4 verlaufenden Linie l₁ und ist der am weitesten von der Mittelebene E entfernt liegende Mittelpunkt. Zwischen den Punkten P₁, P₂ nimmt der Radius stetig zu und der Abstand der auf der Linie l₁ befindlichen Mittelpunkte der zugehörigen Kreise von der Mittelebene E wird größer. Die Kreismittelpunkte auf der Linie l₁ bewegen sich derart vom jeweiligen Wandabschnitt 5c jenseits der Mittelebene E weg. Der Abstand des Mittelpunktes des Kreises mit dem größten Radius r₂ von der Mittelebene E beträgt 10% bis 50% der größten Breite B₂ des radial inneren Abschnittes 4c. Der größte Radius r₂ beträgt bis zum Zweifachen des kleinsten Radius r₁, insbesondere bis zum 1,5-Fachen, besonders bevorzugt bis zum 1,3-Fachen.

Bei einer Ausführungsvariante ist zwischen den äußeren Wandabschnitten 5a und den mittleren Wandabschnitt 5b jeweils eine kleine Übergangsrundung vorgesehen, welche im Querschnitt einen knickfreien Übergang der Wandabschnitte 5a und der Wandabschnitte 5b sicherstellt. Ferner können die äußeren Wandabschnitte 5a im Querschnitt auch unter einem Winkel, welcher insbesondere bis zu 5° beträgt, zur radialen Richtung verlaufen, wobei der radial äußere Abschnitte 4a in Richtung des Einschnittinneren breiter wird.

Die Einschnitte 4 können je nach äußerer Blockform auch unter einem Winkel, welcher bis zu 45° beträgt, zur Querrichtung des Reifens verlaufen. Ferner müssen sich die Einschnitte 4 nicht parallel zueinander erstrecken.

Pro Profilblock 1 sind vorzugsweise zwei bis sechs Einschnitte 4 vorgesehen, wobei die vorgesehenen Einschnitte 4 auch unterschiedlich ausgeführt sein können und vorzugsweise zumindest jeder zweite Einschnitt erfindungsgemäß gestaltet ist.

### Bezugsziffernliste

1 Profilblock
2 Umfangsrille
3 Querrille
4 Einschnitt
4a, 4b, 4c Abschnitt
5 Einschnittwand
5a, 5b, 5c Wandabschnitt
B₁, B₂ Breite
E Mittelebene
T Tiefe
t, t₁, t₂, t₃ Tiefe
α Winkel

## Patentansprüche

1. Fahrzeugluftreifen, insbesondere für den Einsatz unter winterlichen Fahrbedingungen, mit einem Laufstreifen mit durch Rillen voneinander getrennten Profilpositiven (1), beispielsweise Profilblöcken, in welchen im Wesentlichen in axialer Richtung verlaufende Einschnitte (4) ausgebildet sind, welche in radialer Richtung jeweils bis in eine Tiefe (t) von 70% bis 100% der maximalen Profiltiefe (T) reichen, jeweils zwei zur Mittelebene (E) des Einschnittes (4) symmetrisch verlaufende Einschnittwände (5) aufweisen und sich in radialer Richtung aus drei aneinander anschließenden Abschnitten (4a, 4b, 4c) zusammensetzen mit einem radial äußeren Abschnitt (4a), welcher im Wesentlichen von in radialer Richtung verlaufenden Wandabschnitten (5a) begrenzt ist und sich bis in eine Tiefe (t₁) von 70% bis 90% der Tiefe (t) des Einschnittes (4) erstreckt, einem zwischen dem radial äußeren Abschnitt (4a) und dem radial inneren Abschnitt (4c) verlaufenden mittleren Abschnitt (4b) und mit einem radial inneren Abschnitt (4c), welcher im Querschnitt von der Mittelebene (E) nach außen gerundet verlaufende Wandabschnitte (5c) aufweist,
**dadurch gekennzeichnet,**
**dass** sich der zwischen dem radial äußeren Abschnitt (4a) und dem radial inneren Abschnitt (4c) verlaufende mittlere Abschnitt (4b) bis in eine Tiefe (t₂) von 80 % bis 95 % der Tiefe der (t) des Einschnittes (4) erstreckt und von Wandabschnitten (5b) begrenzt ist, die unter Verbreiterung des mittleren Abschnittes (4b) Richtung Einschnittgrund jeweils unter einem Winkel (α) von 5° bis 60° zur radialen Richtung verlaufen, wobei dem gekrümmten Verlauf der Wandabschnitte (5c) im radial inneren Abschnitt (4c) Radien zugrunde liegen, deren zugehörige Kreismittelpunkte entlang einer senkrecht auf die Mittelebene (E) des Einschnittes (4) verlaufenden Linie (l₁) liegen, wobei der Mittelpunkt des zum kleinsten Radius (r₁) gehörenden Kreises auf der Mittelebene (E) liegt und dieser Radius (r₁) zum tiefsten Punkt (P₁) des Einschnittes (4) verläuft, wobei der größte Radius (r₂) jeweils zum radial äußeren Endpunkt (P₂) jedes Wandabschnittes (5c) verläuft und der Mittelpunkt seines Kreises der am weitesten von der Mittelebene (E) entfernt liegende Mittelpunkt ist und wobei zwischen den Punkten (P₁, P₂) die Radien stetig zunehmen und der Abstand der Mittelpunkte der zugehörigen Kreise zur Mittelebene (E) größer wird.

2. Fahrzeugluftreifen nach Anspruch 1, **dadurch gekennzeichnet, dass** der Abstand des Mittelpunktes des Kreises mit dem größten Radius (r₂) von der Mittelebene (E) 10% bis 50% der größten Breite (B₂) des radial inneren Abschnittes (4c) beträgt.

3. Fahrzeugluftreifen nach Anspruch 1, **dadurch gekennzeichnet, dass** der kleinste Radius (r₁) 40 % bis 60 % der größten Breite (B₂) des radial inneren Abschnittes (4c) beträgt.

4. Fahrzeugluftreifen nach einem der Ansprüche 1 bis 3, **dadurch gekennzeichnet, dass** der größte Radius (r₂) bis zum Zweifachen des kleinsten Radius (r₁), insbesondere bis zum 1,5-Fachen, besonders bevorzugt bis zum 1,3-Fachen, beträgt.

5. Fahrzeugluftreifen nach einem der Ansprüche 1 bis 4, **dadurch gekennzeichnet, dass** der radial innere Abschnitt (4c) an seiner breitesten Stelle eine Breite (B₂) von 150 % bis 400 % der Breite (B₁) des radial äußeren Abschnittes (4a) aufweist.

6. Fahrzeugluftreifen nach einem der Ansprüche 1 bis 5, **dadurch gekennzeichnet, dass** die breiteste Stelle des radial inneren Abschnittes (4c) in radialer Richtung in einer Tiefe (t₃) liegt, welche 85% bis 97% der Tiefe (t) des Einschnittes (4) beträgt.

7. Fahrzeugluftreifen nach einem der Ansprüche 1 bis 6, **dadurch gekennzeichnet, dass** der radial äußere Abschnitt (4c) eine Breite (B₁) von 0,30 mm bis 0,80 mm, insbesondere 0,40 mm bis 0,60 mm aufweist.

## Claims

1. Pneumatic vehicle tyre, in particular for use in winter driving conditions, comprising a tread with profile positives (1) separated from one another by grooves, for example profile blocks, in which sipes (4) are formed, running substantially in the axial direction, each reaching down in the radial direction to a depth (t) of 70% to 100% of the maximum profile depth (T), each having two sipe walls (5) running symmetrically in relation to the centre plane (E) of the sipe (4) and being made up in the radial direction of three adjoining portions (4a, 4b, 4c), comprising a radially outer portion (4a), which is substantially bounded by wall portions (5a) running in the radial direction and extends down to a depth (t₁) of 70% to 90% of the depth (t) of the sipe (4), a middle portion (4b), running between the radially outer portion (4a) and the radially inner portion (4c), and comprising a radially inner portion (4c), which has wall portions (5c) which in cross section extend from the centre plane (E) outwards in a rounded fashion, **characterized**
**in that** the middle portion (4b), running between the radially outer portion (4a) and the radially inner portion (4c), extends down to a depth (t₂) of 80% to 95% of the depth (t) of the sipe (4) and is bounded by wall portions (5b), which while widening the middle portion (4b) run in the direction of the sipe base in each case at an angle (α) of 5° to 60° in relation to the radial direction, the curved profile of the wall portions (5c) in the radially inner portion (4c) being based on radii of which the associated centres of circles lie along a line (l₁) running perpendicularly to the centre plane (E) of the sipe (4), the centre of the circle associated with the smallest radius (r₁) lying on the centre plane (E) and this radius (r₁) running to the lowest point (P₁) of the sipe (4), the greatest radius (r₂) in each case running to the radially outer end point (P₂) of each wall portion (5c) and the centre of its circle being the centre lying furthest away from the centre plane (E), and the radii continuously increasing between the points (P₁, P₂) and the distance of the centres of the associated circles from the centre plane (E) becoming greater.

2. Pneumatic vehicle tyre according to Claim 1, **characterized in that** the distance of the centre of the circle with the greatest radius (r₂) from the centre plane (E) is 10% to 50% of the greatest width (B₂) of the radially inner portion (4c).

3. Pneumatic vehicle tyre according to Claim 1, **characterized in that** the smallest radius (r₁) is 40% to 60% of the greatest width (B₂) of the radially inner portion (4c).

4. Pneumatic vehicle tyre according to one of Claims 1 to 3, **characterized in that** the greatest radius (r₂) is up to two times the smallest radius (r₁), in particular up to 1.5 times, particularly preferably up to 1.3 times.

5. Pneumatic vehicle tyre according to one of Claims 1 to 4, **characterized in that** the radially inner portion (4c) has at its widest point a width (B₂) of 150% to 400% of the width (B₁) of the radially outer portion (4a).

6. Pneumatic vehicle tyre according to one of Claims 1 to 5, **characterized in that** the widest point of the radially inner portion (4c) in the radial direction lies at a depth (t₃), which is 85% to 97% of the depth (t) of the sipe (4).

7. Pneumatic vehicle tyre according to one of Claims 1 to 6, **characterized in that** the radially outer portion (4c) has a width (B₁) of 0.30 mm to 0.80 mm, in particular 0.40 mm to 0.60 mm.

## Revendications

1. Pneumatique de véhicule, en particulier pour une utilisation dans des conditions de circulation hivernales, avec une bande de roulement dotée de profilages positifs (1) séparés l'un de l'autre par des sillons, par exemple des blocs profilés, dans lesquels sont formées des encoches (4) s'étendant essentiellement en direction axiale, qui pénètrent en direction radiale chacune jusqu'à une profondeur (t) de 70 % à 100 % de la profondeur de profil maximale (T), présentent chacune deux parois d'encoche (5) s'étendant de façon symétrique par rapport au plan médian (E) de l'encoche (4) et se composent en direction radiale de trois parties se raccordant l'une à l'autre (4a, 4b, 4c) avec une partie radialement extérieure (4a), qui est limitée essentiellement par des parties de paroi (5a) s'étendant en direction radiale et qui s'étend jusqu'à une profondeur (t₁) de 70 % à 90 % de la profondeur (t) de l'encoche (4), avec une partie moyenne (4b) s'étendant entre la partie radialement extérieure (4a) et la partie radialement intérieure (4c), et avec une partie radialement intérieure (4c), qui présente en section transversale des parties de paroi (5c) arrondies vers l'extérieur à partir du plan médian (E),
**caractérisé en ce que** la partie moyenne (4b) s'étendant entre la partie radialement extérieure (4a) et la partie radialement intérieure (4c) s'étend jusqu'à une profondeur (t₂) de 80 % à 95 % de la profondeur (t) de l'encoche (4) et est limitée par des parties de paroi (5b), qui s'étendent avec un élargissement de la partie moyenne (4b) en direction du fond d'encoche chaque fois sous un angle (α) de 5° à 60° par rapport à la direction radiale, dans lequel l'allure incurvée des parties de paroi (5c) dans la partie radialement intérieure (4c) est basée sur des rayons dont les points centraux correspondants sont situés le long d'une ligne (l₁) s'étendant perpendiculairement au plan médian (E) de l'encoche (4), dans lequel le point central du cercle correspondant au plus petit rayon (r₁) est situé sur le plan médian (E) et ce rayon (r₁) s'étend jusqu'au point le plus profond (P₁) de l'encoche (4), dans lequel le plus grand rayon (r₂) s'étend chaque fois jusqu'au point extrême radialement extérieur (P₂) de chaque partie de paroi (5c) et le point central de son cercle est le point central situé le plus loin du plan médian (E) et dans lequel les rayons augmentent de façon continue entre les points (P₁, P₂) et la distance des points centraux des cercles correspondants au plan médian (E) augmente.

2. Pneumatique de véhicule selon la revendication 1, **caractérisé en ce que** la distance du point central du cercle avec le plus grand rayon (r₂) au plan médian (E) vaut 10 % à 50 % de la plus grande largeur (B₂) de la partie radialement intérieure (4c).

3. Pneumatique de véhicule selon la revendication 1, **caractérisé en ce que** le plus petit rayon (r₁) vaut 40 % à 60 % de la plus grande largeur (B₂) de la partie radialement intérieure (4c).

4. Pneumatique de véhicule selon l'une quelconque des revendications 1 à 3, **caractérisé en ce que** le plus grand rayon (r₂) vaut jusqu'au double du plus petit rayon (r₁), en particulier jusqu'à 1,5 fois, en particulier de préférence jusqu'à 1,3 fois.

5. Pneumatique de véhicule selon l'une quelconque des revendications 1 à 4, **caractérisé en ce que** la partie radialement intérieure (4c) présente à son endroit le plus large une largeur (B₂) de 150 % à 400 % de la largeur (B₁) de la partie radialement extérieure (4a).

6. Pneumatique de véhicule selon l'une quelconque des revendications 1 à 5, **caractérisé en ce que** l'endroit le plus large de la partie radialement intérieure (4c) se situe en direction radiale à une profondeur (t₃), qui vaut 85 % à 97 % de la profondeur (t) de l'encoche (4).

7. Pneumatique de véhicule selon l'une quelconque des revendications 1 à 6, **caractérisé en ce que** la partie radialement extérieure (4c) présente une largeur (B₁) de 0,30 mm à 0,80 mm, en particulier de 0,40 mm à 0,60 mm.
